# EUROPEAN PATENT SPECIFICATION

(11) **EP 0 835 051 B1**
(45) Date of publication and mention of the grant of the patent: **20.03.2002**
(21) Application number: 95924096.1
(22) Date of filing: 30.06.1995
(51) Int. Cl.: A01B 61/04

(54) **A SOIL PENETRATING TOOL ASSEMBLY**
IN DEN BODEN EINDRINGENDE GERÄTEVERBINDUNG
ASSEMBLAGE CONSTITUANT UN OUTIL POUR LABOURER LA TERRE

(43) Date of publication of application: 15.04.1998
(73) Proprietor: YEOMANS, Allan James, Surfers Paradise, QLD 4217 (AU)
(72) Inventor: YEOMANS, Allan James, Surfers Paradise, QLD 4217 (AU)
(74) Representative: Gee, Steven William
(86) International application number: AU9500396
(87) International publication number: WO9701949

(56) References cited:
- EP-A- 0 109 882
- AU-A- 7 944 991
- DE-A- 1 908 381
- GB-A- 2 259 839
- US-A- 4 353 421
- DERWENT SOVIET INVENTIONS ILLUSTRATED, SECTION III, MECHANICAL AND GENERAL, Volume V, No. 16, issued 24 May 1974, Miscellaneous, page 3; & SU,A,387 642 (ALEKSANDRYAN et al.) 9 October 1973.
- DERWENT ABSTRACT, Accession No. K6412X/44, Class P11; & SU,A,498 923 (VORON FOREST INST) 14 April 1976.

## Description

### Technical Field

This invention relates to an improved soil penetrating tool assembly, and in particular to an assembly which has the capability of avoiding or jumping obstructions, for example stumps in the ground.

### Background Art

Soil penetrating tool assemblies are commonly used in the agricultural industry to break up soil to facilitate sowing of seeds or for other soil preparation procedures. The tool assemblies often include a shank which is sharpened at one end or alternatively provided with a soil penetrating tool and the shanks are mounted to a cultivator frame that is pulled by a tractor through a draw bar or mounted to a tool bar that is attached to the tractor by means of a three point hitch.

It has been common for the shanks of the tool assemblies to be releasably mounted to prevent damage to the shanks, frame, tool bar and/or the shank carrying implement when an obstruction is encountered in the soil.

Various devices have been used to attach tool assemblies and shanks to a cultivator frame. In one common configuration, a clamping assembly is clamped or bolted to the frame and the shank supported in a yoke to the clamping assembly by a mounting pin or bolt and a shear pin extending through sets of aligned holes. Where excessive obstructions or loads in the ground are encountered, the shank may pivot and cause the shear pin to break. In such arrangements and in other arrangements where shear pin systems are used, the breakage of a shear pin necessitates stopping the prime mover and replacement of the shear pin to enable ploughing to be recommenced.

Other arrangements like in DE 1 908 381 have provided a spring system wherein a spring applies a biasing force to the shank to maintain the shank in the ground. The spring, however, normally is required to be of such a size as to exert as high as possible force on the shank to maintain it in the ground. Sufficient force to maintain the digging point in the ground in hard compacted soils would require springs of huge and impractical sizes.

Other systems like those presented in EP 0 109 882 and US 4 353 421 have used hydraulic rams as a means for opposing movement of the shank out of the ground. These systems would require huge and impractical hydraulic rams to maintain penetration in hard compacted soils. Such large rams or large springs also subject the digging points and shanks to possible breakage during the obstruction jumping action when the shanks and points are in the raised non digging configuration. Furthermore, springs and rams in the above configurations are arranged to exert a force on the shank in such a manner that all movements of the shank will be opposed by the same force.

The present invention aims to overcome or alleviate one or more of the above described disadvantages or at least provide an alternative to the soil penetrating tool assemblies of the type described above. Other objects and advantages will become apparent from the following description.

### Summary of the Invention

The present invention thus provides in a preferred aspect a soil penetrating tool assembly said tool assembly including a soil penetrating tool arranged for movement between a first lowered operative attitude and a second raised inoperative attitude and fluid ram means associated with said tool, said ram means opposing movement of said tool away from said first attitude under the influence of fluid at a first fluid pressure, and means for connecting said ram means to a fluid supply at a pressure lower than said first pressure upon a predetermined movement of said tool away from its said first attitude.

The soil penetrating tool of the tool assembly is preferably mounted for pivotal movement between its first and second attitudes. The tool is caused to move away from its first attitude on striking a large obstruction in the ground. This will cause the tool to pivot in order to clear the obstruction with this movement being opposed by the fluid ram means subject to the first pressure until the predetermined movement occurs where the ram means is subject to the lower pressure which allows the tool against less resistance to pivot upwardly to clear the obstruction. This may be achieved through a gradual pressure reduction from the first pressure to the lower pressure or may be a stepped pressure reduction.

The tool assembly most commonly is constructed so as to be mountable to a tool bar of an implement and for this purpose the tool assembly may include a clamp for mounting of the assembly to the tool bar. The tool may be supported to the tool bar through a linkage which in addition to the pivotal movement of the tool described above permits the tool to lift upwardly when striking or meeting an obstruction. The linkage may comprise a pivotal link assembly which is pivotally mounted at one end to the clamp and which pivotally supports at its opposite end the shank of the tool. Connected between the tool shank or an extension thereof and the clamp is a fluid ram preferably a hydraulic ram which normally urges the tool into the ground. The ram is pivotally connected to the clamp and to the shank. For this purpose the ram includes a cylinder and a piston assembly, the cylinder being pivotally connected to the clamp and the piston assembly being pivotally connected to the tool or an extension thereof. Alternatively these connections may be reversed.

The ram is arranged to oppose movement of the tool away from its first attitude under the influence of a first predetermined pressure during a first range of movement of the tool away from its first attitude. Thereafter the ram is connected to a fluid supply at a reduced pressure so as to allow the tool to have less resistance to movement away from its first attitude so as to allow the tool to more easily clear obstructions.

For the above purpose, valve means are provided to partially relieve fluid pressure within the cylinder of the ram upon a predetermined movement of the piston assembly into the ram consequent upon movement of the tool away from its first attitude. In one form, the valve means may be arranged internally of the ram such that upon a predetermined movement of the piston assembly into the cylinder of the ram, the cylinder is connected by the valve means to a fluid supply at a reduced pressure thereby allowing movement of the piston assembly into the cylinder against the reduced fluid pressure.

In an alternative configuration the valve means may be arranged externally of the ram, the valve means being connected to the cylinder of the ram and being actuated upon a predetermined movement of the piston assembly into the ram to connect the ram to a fluid pressure supply at a reduced pressure.

The reduced fluid pressure within the cylinder also serves to urge the tool back towards its first operative position. During movement of the piston assembly urging the tool back towards its first position the valve means will be closed such that the tool in its first position is again required to overcome the increased pressure to allow it to move clear of large obstructions as before.

Where the valve means is arranged internally of the ram the cylinder of the ram may be connected to an end block at the end of the cylinder opposite the piston assembly. The end block is connected to a fluid pressure supply and includes an elongated tubular member communicating with the fluid pressure supply and extending preferably coaxially through the cylinder. The end of the tubular member carries a first valve member. A second valve member adapted for cooperation with the first valve member is arranged on the piston assembly, the valve members normally cooperating to prevent fluid flow through the tubular member into the cylinder. Upon the predetermined movement of the piston assembly into the cylinder, the first and second valve members separate to allow the fluid in the cylinder to be exposed to the reduced pressure in the fluid supply through the tubular member. The piston assembly is thus more easily permitted to move into the cylinder thus permitting movement of the shank away from its first attitude. The valve defined by the first and second valve members closes to close communication between the tubular member and cylinder when the piston assembly returns the tool back towards its first attitude.

The first valve member of the tube is preferably in the form of an annular member or enlargement at the free end of the tube. The piston of the piston assembly is preferably hollow such that the tube extends into the interior thereof. The second valve member carried by the piston assembly is preferably in the form of an annular insert within the piston and/or piston rod which in the closed position of the valve means is in sealing engagement with the first valve member at the end of a tubular member. The annular insert may be formed of plastics material. When subject to fluid pressure within the cylinder, the annular insert expands so as to ensure sealing engagement with the valve member at the end of the tube.

The fluid pressure for resisting the first movement of the piston assembly is preferably established through a fluid pressure multiplier. A similar effect may be achieved using a spring pressure reduction valve. The fluid pressure multiplier may include a stepped piston whose larger piston end is exposed to the system fluid pressure and whose smaller end normally communicates with the cylinder such that when the piston is initially retracted, its movement is opposed by the multiplied fluid pressure at the smaller end of the piston.

For return of the piston assembly to its fully extended position with the tool in the first operative attitude, fluid is supplied primarily through the tubular member and open valve means into the cylinder. When the valve means is closed upon the predetermined extension movement of the piston assembly, fluid to the cylinder can no longer be supplied through the tubular member. In this instance fluid to the cylinder is supplied through an auxiliary passage connected to the system fluid supply. To reduce shock loadings as the tool returns towards its first attitude the auxiliary passage may be reduced in cross-section or include a portion of reduced cross-section to limit the flow to the cylinder and thereby reduce the speed of movement of the piston assembly as it returns the tool to its first attitude.

Whilst the tool may be mounted through a linkage assembly as described to a tool bar it may if desired by directly pivotally mounted to the clamp which clamps the tool assembly to the tool bar. The tool assembly of course may be mounted to a prime mover by any other suitable arrangement for example through a three point linkage. The tool may be of any suitable type as required to achieve ploughing or other earth working and may include a fixed tip or removable tip.

In yet a further aspect, a soil penetrating tool assembly, said tool assembly including a soil penetrating tool arranged for movement between a first lowered operative attitude and a second raised inoperative attitude and means for opposing movement of said tool away from said first attitude, said means including first fluid pressure establishing means and second fluid pressure establishing means, said tool being subject to said second fluid pressure establishing means upon a predetermined movement thereof away from said first attitude, said second fluid pressure establishing means being at a lower pressure than said first fluid pressure establishing means.

### Brief Description of the Drawings

In order that the invention may be more readily understood and put into practical effect, reference will now be made to the accompanying drawings which illustrate a preferred embodiment of the invention and wherein:-
Fig. 1 illustrates a tool assembly according to the present invention in a first operative attitude;
Fig. 2 illustrates the tool assembly of Fig. 1 with the shank of the tool partially raised to clear an obstruction;
Fig. 3 illustrates the tool assembly of Fig. 1 with the shank assembly raised further to clear an obstruction;
Fig. 4 is a sectional view of the ram for use in the tool assembly of the invention;
Fig. 5 is a perspective cut-away view of the end block of the cylinder of the ram of Fig. 4;
Fig. 6 is a schematic longitudinal sectional view of the block and part of the cylinder in the direction A-A of Fig. 5 with the multiplier omitted;
Fig. 7 is a sectional elevational view along line B-B of Fig. 6;
Fig. 8 is a sectional view along line C-C of Fig. 6;
Fig. 9 is a schematic sectional view in the direction B-B of Fig. 6 with details to the right of line D-D omitted;
Fig. 10 illustrates the ram of Fig. 4 in the pressure release attitude; and
Fig. 11 illustrates a further embodiment of the invention.

### Detailed Description of the Embodiment

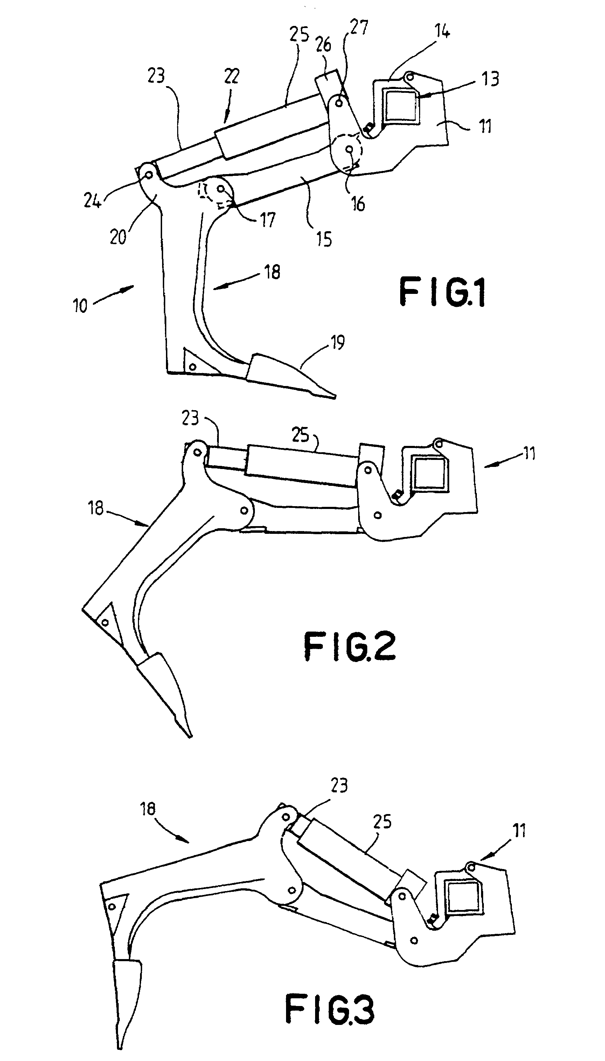

Referring to the drawings and firstly to Figs. 1 to 3 there is illustrated a soil penetrating tool assembly 10 according to the present invention, including a tool support member 11 which is adapted to be mounted to a tool bar 12 and which for this purpose includes a first fixed jaw 13 which is arranged to engage a pair of adjacent faces of the tool bar 12. A clamping plate 14 is adapted to co-operate with the tool bar 12 and member 11 to clamp the tool assembly 10 to the tool bar 12. The support member 11 pivotally supports a link assembly 15 through a pivot connection 16. The link assembly 15 at its opposite end supports via a pivot connection 17 a tool shank 18 which may carry at its lower end a soil penetrating tool 19 which may comprise a removable tip.

The shank 18 includes a pair of spaced ears 20 and a similar pair of spaced ears 21 are provided on the support member 11. Extending between the respective pairs of ears 20 and 21 is an hydraulic ram 22 which is adapted to apply a biasing force to the shank 18 to urge it into the ground. The ram 22 includes a piston assembly 23 pivotally mounted at 24 to the ears 20 and a cylinder 25 terminating in a valve block 26 pivotally mounted at 27 between the ears 21. Thus hydraulic fluid supplied to the cylinder 25 will extend the piston assembly 23 to urge the shank 18 into the ground. If an obstruction or increased loading is encountered by the shank 18, it will pivot upwardly and rearwardly as shown in Fig. 2 causing inward movement of the piston assembly 23 into the cylinder 25 which is resisted by the pressure of fluid in the cylinder 25. If the force applied by the shank 18 causes the piston assembly 23 to be moved a predetermined distance into the cylinder 25, fluid pressure in the cylinder 25 is partially relieved to allow for further freer movement of the shank 18 upwardly in the manner shown in Fig. 3 to clear the obstruction to prevent the possibility of damage to the shank 18 or tool 19.

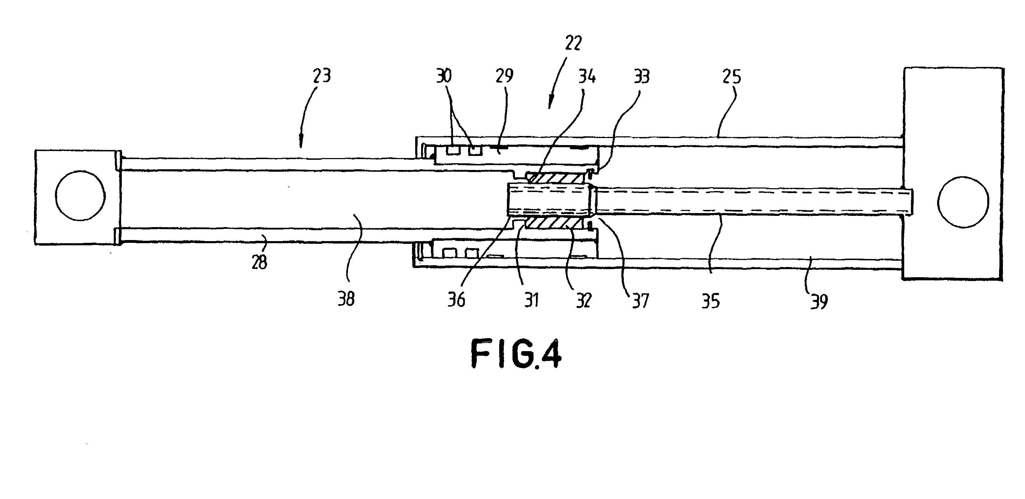

To enable this action to be achieved, the hydraulic ram 22 is of the construction shown in Fig. 4. The piston assembly 23 of the ram 22 includes a hollow piston rod 28 which carries at one end a piston 29 provided with appropriate seals 30, the piston 29 being arranged for sliding movement within the cylinder 25. An annular shoulder 31 is formed inwardly of the "piston" end of the rod 28 against which an annular insert 32 abuts, the insert 32 being retained in position by means of a circlip 33. The insert 32 has its trailing end annularly chamfered as at 34 for a purpose as will be described further below.

The cylinder 25 extends from, and is secured to, the end block 26 by welding or by other connection arrangement or alternatively the cylinder 25 may be integrally formed with the end block 26. A hollow tubular member 35 is rigidly attached to or integrally formed with the block 26 and is arranged co-axially with the piston rod 28 and extends into the piston rod 28 and piston 29. The hollow tubular member 35 carries at its free end, an annular valve member 36 having an annular chamfered end face 37 facing opposite the face 34 of the insert 32. The valve member 36 is sealingly engaged with the insert 32 but is slidable relative thereto. The insert 32 is formed of a plastics material and when subject to fluid pressure within the cylinder 25 it is forced towards the shoulder 31 so that it is compressed axially and caused to expand radially to be urged into firm engagement with the valve member 36 to maintain sealing therebetween.

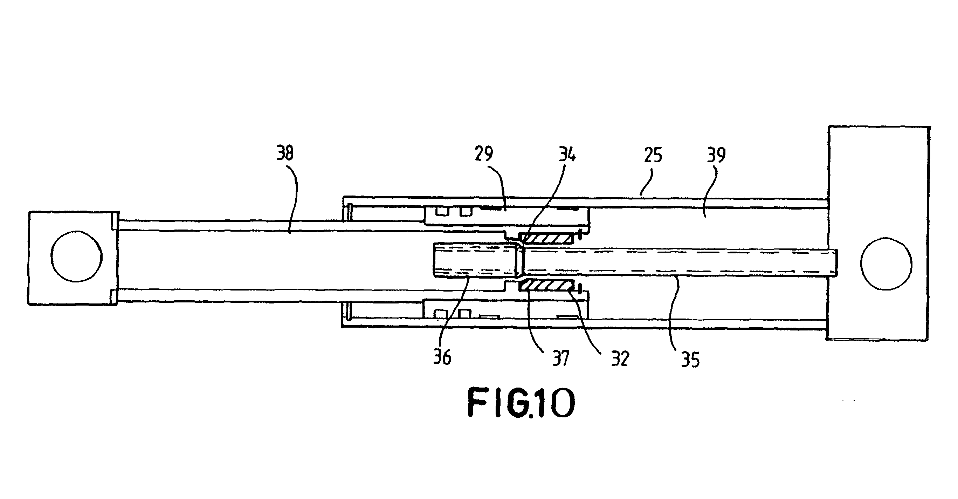

The co-operation between the valve member 36 and insert 32 provides a fluid separation between the interior 38 of the piston rod 28 and the interior 39 of the cylinder 25 until the piston rod 23 and piston 29 are moved a predetermined distance into the cylinder 25 as governed by the distance between the respective chamfered faces 34 and 37. When this predetermined degree of movement occurs, the face 37 moves to a position adjacent and past the face 34 permitting fluid communication between the interior 38 of the piston rod 28 and interior 39 of the cylinder 25 as shown in Fig. 10. This also allows communication between the interior 39 of the cylinder 25 and the interior of the hollow tubular member 35.

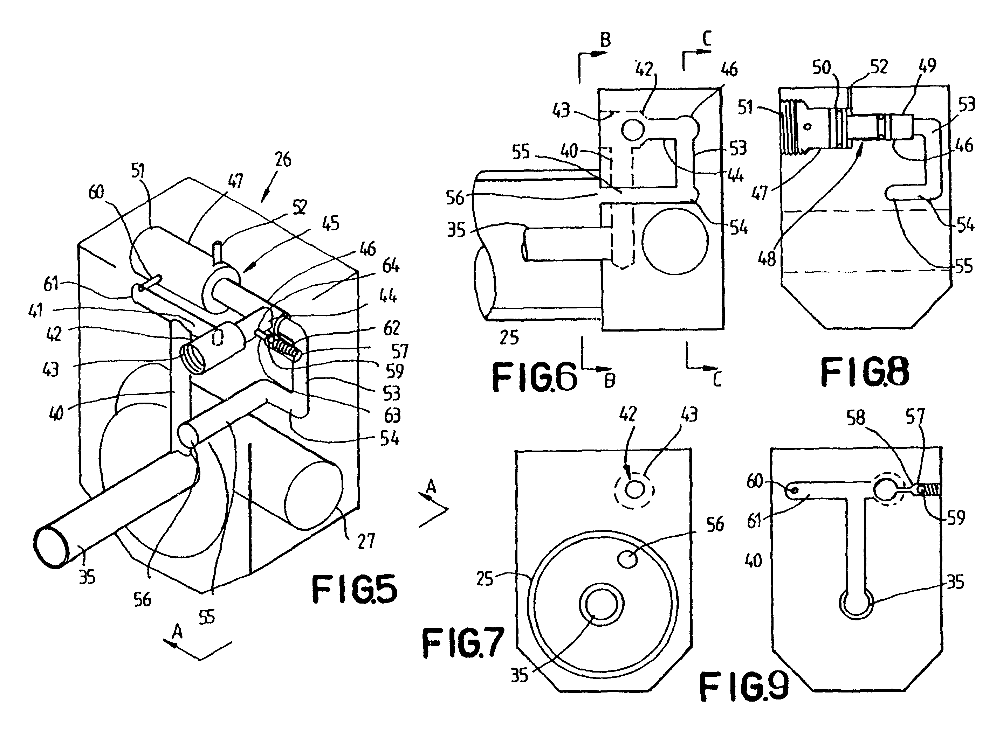

As stated above, the hollow tubular member 35 is connected to the block 26 and as shown in Figs. 5 and 6 communicates with a first upright passage 40 in the block 26 which at its upper end is connected through a further passage 41 to a chamber 42, the latter opening to one side of the block 26 and being internally threaded at 43 so as to permit connection via hydraulic hose to the hydraulic circuit of the prime mover or a hydraulic accumulator. The chamber 42 communicates through a passage 44 with a further chamber 45 which has a first portion 46 and a second portion 47 of enlarged diameter relative to the first portion 46. A stepped piston assembly 48 (see Fig. 8) is located within the chamber 45 having connected pistons 49 and 50 located in the respective chamber portions 46 and 47. The end 51 of the chamber portion 47 is blocked by a screw-in plug, whilst an air vent passage 52 vents the chamber portion 47 forwardly of the piston 50 to the atmosphere. The arrangement of piston assembly 48 within the chamber 45 serves as an hydraulic pressure multiplier as described further below.

The chamber portion 46 additionally is connected via respective passages 53, 54 and 55 to the interior 39 of the cylinder 25 with the passage 55 opening into the cylinder 25 at 56. The piston assembly 48 also acts as a valve with fluid pressure in the chamber portion 47 normally forcing the piston assembly 48 to one end of the chamber 45 (to the right as shown in Fig. 8) so as to block communication of the passage 44 with the chamber portion 46. In addition the piston 49 is forced hard up against the end of the chamber portion 46 to block communication of the passage 53 with the chamber portion 46 and the passage 44. A further passage 57 is connected to the passage 44 and passage 53, the passage 57 including a valve seat 58 on which a ball valve 59 may seat. Further intersecting passages 60 and 61 connect the chamber portion 47 rearwardly of the piston 50 to the chamber 42.

In use, and where the chamber 42 is connected to a supply of hydraulic fluid, for example at 2000 psi, that fluid flows through the passages 41, 61 and 60 to the chamber portion 47 to act on the piston assembly 48 to urge the piston assembly 48 to the right as shown in Fig. 8 to cause the piston 49 to block off communication of the passage 44 with the chamber portion 46 and also be forced up against the end of the chamber portion 46. Thus, fluid flowing into the chamber 42 is blocked from communication with the chamber portion 46 through the passageway 44 because of the position of the piston 49. Supply of fluid to the chamber portion 47 causes, through the stepped nature of the piston assembly 45, a multiplying pressure effect at the end of the piston 49 proportional to the respective surface areas of the pistons 50 and 49. For example, if, as in this instance, the pistons 50 and 49 have a ratio of 3:1, the pressure seen at the end of the chamber 46 is three times the pressure in the chamber portion 47. Thus in the present case, under maximum load, the pressure at the end of the chamber portion is 6000 psi. when the pressure in the chamber portion 47 is 2000 psi. This pressure is also seen, because of the passages 53, 54 and 55 at the interior 39 of the cylinder 25. When an obstruction is encountered causing a force to be applied to the tool shank 18, the piston 29, when the applied force exceeds a predetermined level, will move within the cylinder 25 and towards the end block 26 thus creating in the cylinder 25 a pressure which can reach, in this embodiment, up to three times the accumulator or hydraulic system pressure.

In operation and where a very high resistance is encountered for example where the shank 18 or tool 19 strikes a large obstruction, the piston assembly 23 will be urged inwardly against the fluid pressure within the cylinder 25 as determined by the pressure multiplier piston assembly 48. As the piston 29 moves within the cylinder 25 towards the block 26 overcoming that pressure, fluid will be caused to flow through the passages 55, 54 and 53 to the end of the chamber portion 46 to act on the piston 49. The piston assembly 48 will thus be forced to move rearwardly. Movement of the piston assembly 48 is permitted as the chamber portion 47 between the pistons 49 and 50 is vented through the passage 52 to atmosphere. Communication between the chamber 46 and passage 44 is opened when the piston assembly 48 moves a predetermined amount permitting fluid in the interior 39 of the cylinder 25 to flow back to the accumulator or hydraulic system. Where a predetermined movement of the piston 29 occurs, the valve member 36 and insert 34 will be moved to a position where the surfaces 34 and 37 are spaced apart to permit fluid to flow from the interior 39 of the cylinder 25 into the member 35 to pass into the passage 40. The passage 40, however, is subject to the reduced pressure through its connection via the passage 41 to the chamber 42 which is connected to the hydraulic accumulator or normal fluid pressure supply, in this case 2000 psi. This thereby reduces the pressure of fluid within the cylinder 25 which allows the shank 18 to have less resistance to movement and pivot upwardly and clear the obstructions in the manner shown in Figs. 2 and 3.

Fluid at system pressure is continued to be supplied to the interior 39 of the cylinder 25 through the tubular member 35 and past the insert 32 and valve member 36 which are open, so as to act on the face of the piston 29. Some fluid will also be supplied from the chamber 42 past the valve 59 and through the passages 53, 54 and 55 to the interior of the cylinder 39. The pressure of the fluid supplied to the interior 39 of the cylinder 25 however is at the reduced system pressure, in this instance 2000 psi. The piston assembly 23 will thus be caused to extend from the cylinder 25 with the ram 22 expanding to urge the tool shank 18 from the position of Fig. 3 back towards the positions of Fig. 2 and Fig. 1 with the tool 19 being forced into the ground. When however the piston 29 has moved a predetermined degree, the valve opening between the valve member 36 and insert 32 will close thereby blocking fluid supply through the tube 35. Fluid however will continue to flow from the chamber 42 through the passage 44 and past the ball valve 59 into the passages 53, 54 and 55 into the interior 39 of the cylinder 25 to act on the piston 29 to continue extension of the piston assembly 23 and thereby urge the tool shank 18 back towards the position of Fig. 1.

As is apparent in Fig. 5 the ball valve chamber 57 has a seat 58 upon which the ball 59 seats under the biasing effect of a spring 62. A passage 63 is connected between the valve seat 58 and chamber 44 to communicate the valve chamber 47 with the chamber 44. The passage 63 is of reduced diameter which limits the rate of flow of fluid from the chamber 44 to the passages 53, 54 and 55 to the interior 39 of the cylinder 25. This will reduce the speed of movement of the shank 18 back into the ground thereby minimising shock loadings on the shank and other components of the tool assembly 10. This overcomes a disadvantage of conventional systems where to return a shank into the ground, the ram is subject to full flow from a hydraulic circuit causing rapid movement of the shank 18 into the ground and high shock loadings on the assembly.

The tool shank 18 is thus returned to the position of Fig. 1 and able to act in the manner described previously.

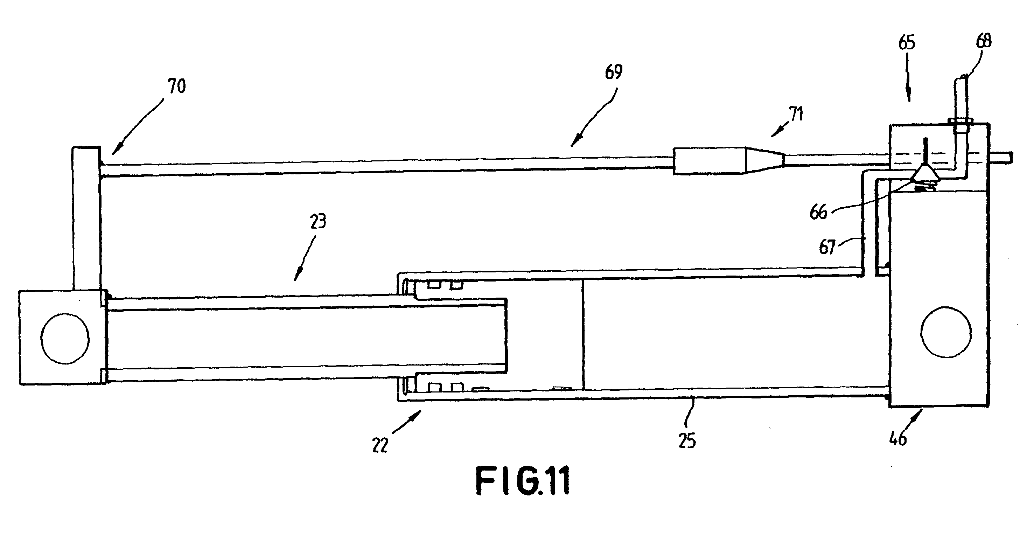

In the embodiment described with reference to Figs. 4 to 10 fluid supply to the cylinder 25 is controlled by means of the valving arrangement between the valve member 36 and insert 32 within the cylinder 25. It is possible however to have the ram 22 controlled by an external valve as for example shown in the configuration of Fig. 11. In this embodiment the ram 22 does not incorporate the internal tube 35, insert 32 or valve member 36. To effect relief of fluid pressure within the cylinder 25 when the piston assembly 23 moves a predetermined distance into the cylinder 25, an external valve 65 is provided, the valve 65 in this embodiment including a valve member 66 which controls communication between a passage 67 connected to the cylinder 25 and a passage 68 connected to the hydraulic circuit or accumulator. The valve 65 may be mounted on the block 46 which contains the components described previously for establishing through the fluid pressure multiplies a high resistance to movement of the piston assembly 23 into the cylinder 25. An external actuating member 69 is connected at 70 to the piston assembly 23 and carries an actuating cam 71 for actuating the valve 66. The actuating member 69 is supported for sliding movement relative to the valve 65 by for example being guided in a bore therein.

Upon a predetermined movement of the piston assembly 23 into the cylinder 25, the cam 71 will contact and cause actuation of the valve 66 to open up communication between the passage 67 and passage 68 to connect the cylinder 25 to the reduced fluid pressure within the hydraulic circuit or accumulator. The cam 71 through its co-operation with its valve 66 causes a gradual opening of the valve 66 as it moves so that the cylinder 25 is subject to a progressive reduction in fluid pressure. The reduced pressure within the cylinder 25 will permit as described previously the shank 18 to pivot further upwardly as in Fig. 3 to clear large obstructions. When the obstruction has been cleared and resistance on the shank 18 reduced, the system hydraulic pressure supplied through the passages 68, open valve 66 and passage 67 will return the shank 18 back towards the attitude of Fig. 1. Upon a predetermined movement of the piston assembly 23, the cam 71 will cease acting on the valve 66 such that the valve 66 will close and the ram 22 will be urged back to its Fig. 1 position by fluid supply past the ball valve 59 and passages 53, 54 and 55 as described previously. The shank 18 will then be in an attitude in which it is subject to the increased opposing fluid pressure in the manner described previously.

In the preferred embodiment movement of the tool is opposed by a fluid pressure ram using hydraulic fluids. Pneumatic rams however may also be used for opposing tool movement.

The soil penetrating tools as used in the tool assemblies described above may be of many different designs and include single or multiple soil penetrating tips. In addition the tool may include multiple tool shanks whose movement from their operative attitude is opposed in the manner described.

All such variations and modifications are deemed to fall within the broad scope and ambit of the invention as herein set forth.

## Claims

1. A soil penetrating tool assembly (10), said tool assembly (10) including:
a soil penetrating tool (18) arranged for movement between a lowered normal operating position and a raised position wherein said tool (18) can pass an obstruction,
fluid ram means (22) associated with said tool (18), said ram means (22) comprising a cylinder (25) and piston means (28,29) movable in said cylinder (25), and
**characterised by**
fluid pressure relieving means (48) associated with said ram means (22), said fluid pressure relieving means (48) normally resisting displacement of fluid from said ram means (22) and thereby movement of said piston means (28,29) relative to said cylinder and movement of said tool (18) from a said operating position, said fluid pressure relieving means (48) permitting movement of said piston means (28,29) relative to said cylinder (25) and thus said movement of said tool (18) when pressure of fluid within said ram means (25), consequent upon said tool (18) encountering an obstruction, exceeds a predetermined maximum pressure, and
valve means (32,36) internally of said ram means (25), said valve means (32,36) connecting said fluid ram means (22) to a fluid supply having a pressure lower than said predetermined maximum pressure when said movement of said piston means (28,29) exceeds a predetermined movement whereupon said tool (18) is permitted to move towards a said raised position to pass said obstruction.

2. A soil penetrating tool assembly (10) according to Claim 1 **characterised in that** said valve means (32,36) includes a first valve part (36) fixed against movement relative to said cylinder (25) and a second valve part (32) movable with said piston means (28,29).

3. A soil penetrating tool assembly (10) according to Claim 2 and **characterised by** a fluid supply tube (35) connected to said fluid supply, said fluid supply tube (35) extending longitudinally into said cylinder (25), said valve means (32,36) controlling communication between said tube (35) and said cylinder (25).

4. A soil penetrating tool assembly (10) according to Claim 3 **characterised in that** said tube (35) has a free end within said cylinder (25), said free end of said tube (35) carrying said first valve part (36) of said valve means (32,36) and wherein said second valve part (32) of said valve means (32,36) is adapted for cooperation with said first valve part (36) .

5. A soil penetrating tool assembly (10) according to Claim 4 and **characterised in that** said predetermined movement of said piston means (28,29) relative to said cylinder (25) moves said valve parts (32,36) out of register with each other to permit fluid flow therepast through said tube (35) from said fluid supply into said cylinder (25).

6. A soil penetrating tool assembly (10) according to Claim 5 and **characterised in that** said piston means (28,29) is hollow to receive said free end of said tube (35) and wherein said first valve part (36) comprises an annular member or enlargement at said free end of said tube (35) and wherein said second valve part (32) comprises an annular insert within said hollow piston means (28,29).

7. A soil penetrating tool assembly (10) according to Claim 6 and **characterised in that** said hollow piston means (28,29) comprises a hollow piston rod (28) carrying a piston (29) movable within said cylinder (25), said hollow piston rod (28) and piston (29) receiving said free end of said fluid supply tube (35).

8. A soil penetrating tool assembly (10) according to Claim 1 and **characterised in that** said fluid pressure relieving means (48) comprises a fluid pressure multiplier (48) connected to said fluid supply, said fluid pressure multiplier (48) comprising a stepped piston having a larger piston end (50) exposed to said fluid supply pressure and a smaller piston end (49) communicating with said cylinder (25).

9. A soil penetrating tool assembly (10) according to Claim 8 and **characterised in that** said fluid supply is further connected to said cylinder (25) through additional passage means (57), said passage means (57) having a restricted area (63) to restrict flow to said cylinder (25) after said valve means (32,36) is closed to return said tool (18) to said operating position at a reduced rate upon passing a said obstruction.

10. A soil penetrating tool assembly (10) according to Claim 1 **characterised by** mounting means (11,14) for mounting said tool (18) to a tool bar (13) for pivotal movement between its said lowered and raised positions, said tool (18) being supported to said mounting means (11,14) through linkage means (15), said linkage means (15) comprising a pivotal link assembly (15) which is pivotally mounted at one end to said mounting means (11,14) and which pivotally supports at its opposite end said tool (18) and wherein said fluid ram means (28) is connected between said tool (18) and said mounting means (11,14).

11. A fluid ram assembly (22), said ram assembly (22) including a cylinder (25) and a piston means (28,29) movable in said cylinder (25), and **characterised by** fluid pressure relieving means (48) resisting displacement of fluid from said fluid ram assembly (22) and thereby resisting movement of said piston means (28,29) in said cylinder (25) from a first position unless pressure of fluid within said ram assembly (22) exceeds a predetermined maximum pressure, and valve means (32,36) internally of said ram means (22), said valve means (32,36) connecting said ram means (22) to a fluid supply having a pressure lower than said predetermined pressure upon a predetermined movement of said piston means (28,29) in said cylinder from said first position to allow a less restricted movement of said piston means (28,29) in said cylinder (25) away from said first position.

12. A fluid ram assembly (22) according to Claim 11 and **characterised by** a fluid supply tube (35) connected to said fluid supply, said fluid supply tube (35) extending longitudinally into said cylinder (25) and having a free end within said cylinder, said valve means (32,36) including a first valve part (36) carried by said free end of said tube (35) and a second valve part (32) arranged on said piston assembly (28,29) for movement therewith and adapted for cooperation with said first valve part (36), said valve means (32,36) controlling communication between said tube (35) and said cylinder (12).

13. A fluid ram assembly 22 according to Claim 12 **characterised in that** movement of said valve parts (32,36) out of register with each other permits fluid flow therepast from said fluid supply into said cylinder (25) upon said predetermined movement of said piston means (28,29).

14. A fluid ram assembly (22) according to Claim 13 **characterised in that** said hollow piston means (28,29) comprises a hollow piston rod (28) carrying a hollow piston (29) movable within said cylinder (25), said hollow piston rod (28) and piston (29) receiving said free end of said fluid supply tube (35).

15. A fluid ram assembly (22) according to Claim 11 and **characterised in that** said fluid supply is further connected to said cylinder (25) through additional passage means (57), said passage means (57) having a restricted area (63) to restrict flow to said cylinder (25) after said valve means (32,36) is closed to return said piston assembly (28,29) to a said first position at a reduced rate.

## Patentansprüche

1. Bodenpenetrierwerkzeugbaugruppe (10), wobei die genannte Werkzeugbaugruppe (10) Folgendes hat:
ein Boden penetrierwerkzeug (18), das zur Bewegung zwischen einer gesenkten normalen Arbeitsstellung und einer angehobenen Stellung, in der das genannte Werkzeug (18) ein Hindernis umgehen kann, angeordnet ist,
eine mit dem genannten Werkzeug (18) assoziierte Fluiddruckzylindereinrichtung (22), wobei die genannte Druckzylindereinrichtung (22) einen Zylinder (25) und eine in dem genannten Zylinder (25) bewegliche Kolbeneinrichtung (28, 29) beinhaltet, und **gekennzeichnet ist durch**
eine mit der genannten Druckzylindereinrichtung (22) assoziierte Fluiddruckbegrenzungseinrichtung (48), wobei die genannte Fluidruckbegrenzungseinrichtung (48) normalerweise der Verdrängung von Fluid aus der genannten Druckzylindereinrichtung (22) und **dadurch** der Bewegung der genannten Kolbeneinrichtung (28, 29) im Verhältnis zu dem genannten Zylinder und der Bewegung des genannten Werkzeugs (18) aus einer genannten Arbeitsstellung widersteht, wobei die genannte Fluiddruckbegrenzungseinrichtung (48) die Bewegung der genannten Kolbeneinrichtung (28, 29) im Verhältnis zu dem genannten Zylinder (25) zulässt und somit die genannte Bewegung des genannten Werkzeugs (18), wenn der Fluiddruck in der genannten Druckzylindereinrichtung (25) als Folge dessen, dass das genannte Werkzeug (18) auf ein Hindernis stößt, einen vorbestimmten Höchstdruck übersteigt, und
eine Ventileinrichtung (32, 36) im Inneren der genannten Druckzylindereinrichtung (25), wobei die genannte Ventileinrichtung (32, 36) die genannte Fluiddruckzylindereinrichtung (22) mit einer Fluidversorgung verbindet, die einen Druck hat, der niedriger als der genannte vorbestimmte Höchstdruck ist, wenn die genannte Bewegung der genannten Kolbeneinrichtung (28, 29) eine vorbestimmte Bewegung übersteigt, woraufhin das genannte Werkzeug (18) sich zu einer genannten angehobenen Stellung bewegen darf, um das genannte Hindemis zu umgehen.

2. Bodenpenetrierwerkzeugbaugruppe (10) nach Anspruch 1, **dadurch gekennzeichnet, dass** die genannte Ventileinrichtung (32, 36) ein erstes Ventilteil (36) aufweist, das gegen Bewegungen im Verhältnis zum genannten Zylinder (25) fixiert ist, und ein zweites Ventilteil (32), das mit der genannten Kolbeneinrichtung (28, 29) beweglich ist.

3. Bodenpenetrierwerkzeugbaugruppe (10) nach Anspruch 2 und **gekennzeichnet durch** eine mit der genannten Fluidversorgung verbundene Fluidzuleitungsröhre (35), wobei sich die genannte Fluidzuleitungsröhre (35) längs in den genannten Zylinder (25) hinein erstreckt, wobei die genannte Ventileinrichtung (32, 36) die Kommunikation zwischen der genannten Röhre (35) und dem genannten Zylinder (25) regelt.

4. Bodenpenetrierwerkzeugbaugruppe (10) nach Anspruch 3, **dadurch gekennzeichnet, dass** die genannte Röhre (35) innerhalb des genannten Zylinders (25) ein freies Ende hat, wobei das genannte freie Ende der genannten Röhre (35) das genannte erste Ventilteil (36) der genannten Ventileinrichtung (32, 36) trägt, und bei der das genannte zweite Ventilteil (32) der genannten Ventileinrichtung (32, 36) zur Kooperation mit dem genannten ersten Ventilteil (36) ausgeführt ist.

5. Bodenpenetrierwerkzeugbaugruppe (10) nach Anspruch 4 und **dadurch gekennzeichnet, dass** die genannte vorbestimmte Bewegung der genannten Kolbeneinrichtung (28, 29) im Verhältnis zu dem genannten Zylinder (25) die Ventilteile (32, 36) aus der Passung miteinander heraus bewegt, um Fluid aus der genannten Fluidversorgung an ihnen vorbei durch die genannte Röhre (35) hindurch in den genannten Zylinder (25) hinein fließen zu lassen.

6. Bodenpenetrierwerkzeugbaugruppe (10) nach Anspruch 5 und **dadurch gekennzeichnet, dass** die genannte Kolbeneinrichtung (28, 29) hohl ist zum Aufnehmen des genannten freien Endes der genannten Röhre (35), und bei der das genannte erste Ventilteil (36) ein ringförmiges Element oder eine Vergrößerung am genannten freien Ende der genannten Röhre (35) umfasst und bei der das genannte zweite Ventilteil (32) einen ringförmigen Einsatz innerhalb der genannten hohlen Kolbeneinrichtung (28, 29) umfasst.

7. Bodenpenetrierwerkzeugbaugruppe (10) nach Anspruch 6 und **dadurch gekennzeichnet, dass** die genannte hohle Kolbeneinrichtung (28, 29) eine hohle Kolbenstange (28) umfasst, die einen innerhalb des genannten Zylinders (25) beweglichen Kolben (29) trägt, wobei die genannte hohle Kolbenstange (28) und der genannte Kolben (29) das genannte freie Ende der genannten Fluidzuleitungsröhre (35) aufnehmen.

8. Bodenpenetrierwerkzeugbaugruppe (10) nach Anspruch 1 und **dadurch gekennzeichnet, dass** die genannte Fluiddruckbegrenzungseinrichtung (48) einen an die genannte Fluidversorgung angeschlossenen Fluiddruckvervielfacher (48) umfasst, wobei der Fluiddruckvervielfacher (48) einen gestuften Kolben hat mit einem größeren Kolbenende (50), das mit dem genannten Fluidversorgungsdruck in Kontakt ist, und einem kleineren Kolbenende (49), das mit dem genannten Zylinder (25) kommunizierend ist.

9. Bodenpenetrierwerkzeugbaugruppe (10) nach Anspruch 8 und **dadurch gekennzeichnet, dass** die genannte Fluidversorgung ferner durch einen zusätzlichen Durchgang (57) mit dem genannten Zylinder (25) verbünden ist, wobei der genannte Durchgang (57) einen verengten Bereich (63) hat zum Einschränken des Flusses zum genannten Zylinder (25), nachdem die genannte Ventileinrichtung (32, 36) geschlossen wurde, um das genannte Werkzeug (18) nach dem Passieren eines genannten Hindernisses mit einer reduzierten Geschwindigkeit in die genannte Arbeitsstellung zurück zu bringen.

10. Bodenpenetrierwerkzeugbaugruppe (10) nach Anspruch 1, **gekennzeichnet durch** Anbauvorrichtungen (11, 14) zum Montieren des genannten Werkzeugs (18) an einem Geräteträger (13) für Drehbewegungen zwischen seinen genannten gesenkten und angehobenen Stellungen, wobei das genannte Werkzeug (18) **durch** eine Verbindungsvorrichtung (15) stützend mit der genannten Anbauvorrichtung (11, 14) verbunden ist, wobei die genannte Verbindungsvorrichtung (15) eine Drehverbindungsgliedbaugruppe (15) umfasst, die an einem Ende drehbar an der genannten Anbauvorrichtung (11, 14) montiert ist und an ihrem entgegengesetzten Ende das genannte Werkzeug (18) drehbar stützt, und wobei die genannte Fluiddruckzylindereinrichtung (28) zwischen dem genannten Werkzeug (18) und der genannten Anbauvorrichtung (11,14) angeschlossen ist.

11. Fluiddruckzylinderbaugruppe (22), wobei die genannte Druckzylinderbaugruppe (22) einen Zylinder (25) und eine in dem genannten Zylinder (25) bewegliche Kolbeneinrichtung (28, 29) hat, und **gekennzeichnet durch** eine Fluiddruckbegrenzungseinrichtung (48), die der Verdrängung von Fluid aus der genannten Fluiddruckzylinderbaugruppe (22) widersteht und **dadurch** der Bewegung der genannten Kolbeneinrichtung (28, 29) in dem genannten Zylinder (25) aus einer ersten Stellung widersteht, sofern der Fluiddruck innerhalb der genannten Druckzylinderbaugruppe (22) einen vorbestimmten Höchstdruck nicht übersteigt, und eine Ventileinrichtung (32, 36) im Inneren der genannten Druckzylindereinrichtung (22), wobei die genannte Ventileinrichtung (32, 36) nach einer vorbestimmten Bewegung der genannten Kolbeneinrichtung (28, 29) in dem genannten Zylinder aus der genannten ersten Stellung die genannte Druckzylindereinrichtung (22) mit einer Fluidversorgung, die einen niedrigeren Druck hat als den genannten vorbestimmten Druck, verbindet, um eine weniger beschränkte Bewegung der genannten Kolbeneinrichtung (28, 29) in dem genannten Zylinder (25) weg von der genannten ersten Stellung zuzulassen.

12. Fluiddruckzylinderbaugruppe (22) nach Anspruch 11 und **gekennzeichnet durch** eine Fluidzuleitungsröhre (35), die mit der genannten Fluidversorgung verbunden ist, wobei die genannte Fluidzuleitungsröhre (35) sich längs in den genannten Zylinder (25) hinein erstreckt und innerhalb des genannten Zylinders ein freies Ende hat, wobei die genannte Ventileinrichtung (32, 36) ein erstes Ventilteil (36) hat, das von dem genannten freien Ende der genannten Röhre (35) getragen wird, und ein zweites Ventilteil (32), das an der genannten Kolbenbaugruppe (28, 29) angeordnet ist zur Bewegung damit und zur Kooperation mit dem genannten ersten Ventilteil (36) ausgeführt ist, wobei die genannte Ventileinrichtung (32, 36) die Kommunikation zwischen der genannten Röhre (35) und dem genannten Zylinder (12) regelt.

13. Fluiddruckzylinderbaugruppe (22) nach Anspruch 12, **dadurch gekennzeichnet, dass** die Bewegung der genannten Ventilteile (32, 36) aus der Passung miteinander heraus nach der genannten vorbestimmten Bewegung der genannten Kolbeneinrichtung (28, 29) Fluid aus der genannten Fluidversorgung an ihnen vorbei in den genannten Zylinder (25) hinein fließen lässt.

14. Fluiddruckzylinderbaugruppe (22) nach Anspruch 13, **dadurch gekennzeichnet, dass** die genannte hohle Kolbeneinrichtung (28, 29) eine hohle Kolbenstange (28) umfasst, die einen innerhalb des genannten Zylinders (25) beweglichen hohlen Kolben (29) trägt, wobei die genannte hohle Kolbenstange (28) und der genannte Kolben (29) das genannte freie Ende der genannten Fluidzuleitungsröhre (35) aufnehmen.

15. Fluiddruckzylinderbaugruppe (22) nach Anspruch 11 und **dadurch gekennzeichnet, dass** die genannte Fluidversorgung ferner durch einen zusätzlichen Durchgang (57) mit dem genannten Zylinder (25) verbunden ist, wobei der genannte Durchgang (57) einen verengten Bereich (63) hat zum Einschränken des Flusses zum genannten Zylinder (25), nachdem die genannte Ventileinrichtung (32, 36) geschlossen wurde, um die genannte Kolbenbaugruppe (28, 29) mit einer reduzierten Geschwindigkeit in eine genannte erste Stellung zurück zu bringen.

## Revendications

1. Ensemble d'outil de pénétration du sol (10), ledit ensemble d'outil (10) comprenant :
un outil de pénétration du sol (18) agencé de façon à pouvoir se déplacer entre une position d'utilisation normale abaissée, et une position relevée, cas dans lequel ledit outil (18) peut passer un obstacle,
un moyen à vérin hydraulique (22) associé audit outil (18), ledit moyen à vérin (22) comportant un cylindre (25) et un moyen à piston (28, 29) capable de se déplacer dans ledit cylindre (25) et
**caractérisé par**
un moyen de détente de pression de fluide (48) associé audit moyen à vérin (22), ledit moyen de détente de pression de fluide (48) offrant normalement une résistance au déplacement du fluide provenant dudit moyen à vérin (22) et par conséquent au mouvement dudit moyen à piston (28, 29) par rapport audit cylindre et au mouvement dudit outil (18) à partir de l'une desdites positions d'utilisation, ledit moyen de détente de pression de fluide (48) permettant le mouvement dudit moyen à piston (28,29) par rapport audit cylindre (25) et par conséquent, ledit mouvement dudit outil (18), lorsque la pression du fluide à l'intérieur dudit moyen à vérin (25) dépasse une pression maximale prédéterminée, au moment où ledit outil (18) rencontre un obstacle, et
un moyen à soupape (32, 36) prévu à l'intérieur dudit moyen à vérin (25), ledit moyen à soupape (32, 36) reliant ledit moyen à vérin hydraulique (22) à une alimentation en fluide dont la pression est inférieure à ladite pression maximale prédéterminée, lorsque ledit mouvement dudit moyen à piston (28, 29) dépasse un mouvement prédéterminé à la suite de quoi ledit outil (18) peut se déplacer vers ladite position relevée pour passer ledit obstacle.

2. Ensemble d'outil de pénétration du sol (10), selon la revendication 1, **caractérisé en ce que** ledit moyen à soupape (32, 36) inclut une première partie de soupape (36) fixée contre le mouvement par rapport audit cylindre (25) et une deuxième partie de soupape (32) capable de se déplacer avec ledit moyen à piston (28, 29).

3. Ensemble d'outil de pénétration du sol (10), selon la revendication 2, et **caractérisé par** un tube d'alimentation en fluide (35) relié à ladite alimentation en fluide, ledit tube d'alimentation en fluide (35) se prolongeant longitudinalement dans ledit cylindre (25), ledit moyen à soupape (32, 36) contrôlant la communication entre ledit tube (35) et ledit cylindre (25).

4. Ensemble d'outil de pénétration du sol (10), selon la revendication 3, **caractérisé en ce que** ledit tube (35) possède une extrémité libre au sein dudit cylindre (25), ladite extrémité libre dudit tube (35) portant ladite première partie de soupape (36) dudit moyen à soupape (32, 36), et dans lequel ladite deuxième partie de soupape (32) dudit moyen à soupape (32, 36) est adaptée à des fins d'une interaction avec ladite première partie de soupape (36).

5. Ensemble d'outil de pénétration du sol (10), selon la revendication 4, et **caractérisé en ce que** ledit mouvement prédéterminé dudit moyen à piston (28, 29) par rapport audit cylindre (25) oblige les parties de la soupape (32, 36) à se déplacer pour que l'une soit décalée par rapport à l'autre afin de permettre le passage du fluide par celles-ci, à travers ledit tube (35) à partir de ladite alimentation en fluide jusque dans ledit cylindre (25).

6. Ensemble d'outil de pénétration du sol (10), selon la revendication 5, et **caractérisé en ce que** ledit moyen à piston (28, 29) est creux afin de recevoir ladite extrémité libre dudit tube (35) et dans lequel ladite première partie de soupape (36) comprend un élément annulaire ou un agrandissement au niveau de ladite extrémité libre dudit tube (35) et dans lequel ladite deuxième partie de soupape (32) comprend une pièce rapportée annulaire à l'intérieur dudit moyen à piston creux (28, 29).

7. Ensemble d'outil de pénétration du sol (10), selon la revendication 6, et **caractérisé en ce que** ledit moyen à piston creux (28, 29) comporte une tige de piston creuse (28) portant un piston (29) capable de se déplacer à l'intérieur dudit cylindre (25), ladite tige de piston creuse (28) et le piston (29) recevant ladite extrémité libre dudit tube d'alimentation en fluide (35).

8. Ensemble d'outil de pénétration du sol (10), selon la revendication 1, et **caractérisé en ce que** ledit moyen de détente de pression de fluide (48) comprend un multiplicateur de pression de fluide (48) qui est relié à ladite alimentation en fluide, ledit multiplicateur de pression de fluide (48) comprenant un piston à gradins ayant une extrémité de piston plus large (50) qui est exposée à ladite pression d'alimentation en fluide et une extrémité de piston plus petite (49) qui est en communication avec ledit cylindre (25).

9. Ensemble d'outil de pénétration du sol (10), selon la revendication 8, et **caractérisé en ce que** ladite alimentation en fluide est raccordée par ailleurs audit cylindre (25) par l'intermédiaire d'un moyen à passage supplémentaire (57), ledit moyen à passage (57) ayant une zone restreinte (63) afin de restreindre le flux se rendant audit cylindre (25) une fois que ledit moyen à soupape (32, 36) est fermé afin de faire revenir ledit outil (18) vers ladite position d'utilisation à une vitesse réduite au moment du passage dudit obstacle.

10. Ensemble d'outil de pénétration du sol (10), selon la revendication 1, **caractérisé par** un moyen de montage (11,14) permettant de monter ledit outil (18) sur une barre à outils (13) en vue d'un mouvement de pivotement entre lesdites positions abaissée et relevée, ledit outil (18) étant soutenu au niveau des moyens de montage (11,14) par l'intermédiaire d'un moyen de tringlerie (15), ledit moyen de tringlerie (15) comprenant un ensemble à bras pivotant (15) qui est monté de façon pivotante sur l'une des extrémités dudit moyen de montage (11, 14) et qui soutient de façon pivotante, au niveau de son extrémité opposée, ledit outil (18) et dans lequel ledit moyen à vérin hydraulique (28) est raccordé entre ledit outil (18) et ledit moyen de montage (11,14).

11. Ensemble à vérin hydraulique (22), ledit ensemble à vérin (22) comportant un cylindre (25) et un moyen à piston (28, 29) capable de se déplacer dans ledit cylindre (25), et **caractérisé par** un moyen de détente de pression hydraulique (48) qui résiste au déplacement du fluide provenant dudit ensemble à vérin hydraulique (22), et qui résiste par conséquent au mouvement dudit moyen à piston (28, 29) dans ledit cylindre (25) à partir d'une première position, à moins que la pression du fluide à l'intérieur dudit ensemble à vérin (22) dépasse une pression maximale prédéterminée, et un moyen à soupape (32, 36) à l'intérieur dudit moyen à vérin (22), ledit moyen à soupape (32, 36) raccordant ledit moyen à vérin (22) à une alimentation en fluide dont la pression est inférieure à ladite pression prédéterminée lors d'un mouvement prédéterminé dudit moyen à piston (28, 29) dans ledit cylindre à partir de ladite première position afin de permettre un mouvement moins restreint dudit moyen à piston (28, 29) dans ledit cylindre (25) pour l'éloigner de ladite première position.

12. Ensemble à vérin hydraulique (22) selon la revendication 11, et **caractérisé par** un tube d'alimentation en fluide (35) qui est raccordé à ladite alimentation en fluide, ledit tube d'alimentation en fluide (35) se prolongeant dans le sens longitudinal dans ledit cylindre (25) et ayant une extrémité libre dans ledit cylindre, ledit moyen à soupape (32, 26) comportant une première partie de soupape (36) portée par ladite extrémité libre dudit tube (35) et une deuxième partie de soupape (32) agencée sur ledit ensemble à piston (28, 29) en vue d'un mouvement avec celui-ci, et adapté de façon à avoir une interaction avec ladite première partie de soupape (36), ledit moyen à soupape (32, 36) contrôlant la communication entre ledit tube (35) et ledit cylindre (12).

13. Ensemble à vérin hydraulique (22) selon la revendication 12, **caractérisé en ce que** le mouvement desdites parties de soupape (32, 36) qui sont décalées l'une par rapport à l'autre permet à l'écoulement de fluide de passer depuis ladite alimentation en fluide jusque dans ledit cylindre (25) lors dudit mouvement prédéterminé dudit moyen à piston (28, 29).

14. Ensemble à vérin hydraulique (22) selon la revendication 13, **caractérisé en ce que** ledit moyen à piston creux (28, 29) comprend une tige de piston creuse (28) portant un piston creux (29) capable de se déplacer dans ledit cylindre (25), ladite tige de piston creuse (28) et le piston (29) recevant l'extrémité libre dudit tube d'alimentation en fluide (35).

15. Ensemble à vérin hydraulique (22) selon la revendication 11, et **caractérisé en ce que** ladite alimentation en fluide est raccordée par ailleurs audit cylindre (25) par l'intermédiaire d'un moyen à passage supplémentaire (57), ledit moyen à passage (57) ayant une zone restreinte (63) afin de restreindre le flux se rendant audit cylindre (25) une fois que ledit moyen à soupape (32, 36) est fermé afin de faire revenir ledit ensemble à piston (28, 29) vers ladite première position à une vitesse réduite.
